# NEUE EUROPÄISCHE PATENTSCHRIFT

(11) **EP 3 225 467 B2**
(45) Veröffentlichungstag und Bekanntmachung des Hinweises auf die Entscheidung über den Einspruch: **27.04.2022**
(45) Hinweis auf die Patenterteilung: 21.11.2018
(21) Anmeldenummer: 17163349.8
(22) Anmeldetag: 28.03.2017
(51) Int. Cl.: B60R 1/08

(54) **FAHRZEUGSPIEGEL UND VERFAHREN ZU DESSEN HERSTELLUNG**
VEHICLE MIRROR AND METHOD FOR ITS PRODUCTION
RÉTROVISEUR DE VÉHICULE ET SON PROCÉDÉ DE FABRICATION

(30) Priorität: 29.03.2016 DE 102016105668
(43) Veröffentlichungstag der Anmeldung: 04.10.2017
(73) Patentinhaber: FICOSA International GmbH, 38302 Wolfenbüttel (DE)
(72) Erfinder: Stumpe, Matthias, 38259 Salzgitter (DE); Feuerstake, Nancy, 38122 Braunschweig (DE)
(74) Vertreter: Gramm, Lins & Partner Patent- und Rechtsanwälte PartGmbB

(56) Entgegenhaltungen:
- EP-A1- 2 735 478
- WO-A1-96/04152
- DE-B3-102009 009 379
- DE-B3-102014 208 687
- DE-U1- 7 702 748
- DE-U1- 7 702 748
- DE-U1-202009 015 138
- JP-A- 2004 196 224
- US-A1- 2002 141 086
- US-A1- 2004 184 168

## Beschreibung

Die Erfindung betrifft einen Fahrzeugspiegel mit einem Spiegelgehäuse, an dem ein Hauptspiegelglas und zumindest ein Zusatzspiegelglas festgelegt sind sowie ein Verfahren zum Herstellen eines solchen Fahrzeugspiegels.

Fahrzeugspiegel, insbesondere Kraftfahrzeugspiegel für landbetriebene Fahrzeuge, aber auch für schienengebundene Fahrzeuge oder Boote, weisen ein Gehäuse auf, so dass der Fahrzeugspiegel an dem jeweiligen Fahrzeug festlegbar ist. In dem Spiegelgehäuse sind insbesondere für land- und forstwirtschaftliche Fahrzeuge, Nutzfahrzeuge zwei Spiegelarten vorgesehen und vorgeschrieben, nämlich ein Hauptspiegelglas, über den der rückwärtige Bereich großflächig beobachtbar sein soll, sowie ein Zusatzspiegel, der für den Nahbereich vorgesehen ist und gewährleisten soll, dass auch ein Bereich in unmittelbarer Nähe zu dem Spiegelgehäuse und unterhalb des Spiegels für den Fahrzeugnutzer einsehbar ist. Dadurch soll verhindert werden, dass neben dem Fahrzeug befindliche Personen übersehen werden. Ein Nahbereichsspiegel erleichtert zudem das Rangieren des Fahrzeuges. Solche Fahrzeugspiegel sind auch für PKW einsetzbar.

Zur Herstellung solcher Fahrzeugspiegel wird ein Gehäuse erzeugt, beispielsweise durch ein Spritzgussverfahren, in das sowohl das Hauptspiegelglas als auch das Zusatzspiegelglas bzw. Nahbereichsspiegelglas eingesetzt und darin fixiert werden. Dies kann mechanisch erfolgen, beispielsweise über separate Verriegelungselemente, die in Ausnehmungen oder Vorsprünge eingreifen und den Spiegel in dem Gehäuse formschlüssig festlegen. Alternativ oder ergänzend kann der Spiegel eingeklebt oder eingeklemmt werden.

In der Regel ist es notwendig, dass für die rechte und linke Seite an dem Kraftfahrzeug unterschiedliche Fahrzeugspiegel vorgesehen sein müssen, damit der jeweils gewünschte Nahbereich eingesehen werden kann. Eine Verstellung der Spiegelgläser innerhalb des Spiegelgehäuses ist zu aufwendig, eine Anpassung an den jeweiligen Fahrzeugnutzer erfolgt durch eine Gesamtverstellung des Fahrzeugspiegels. Dies führt dazu, dass für die rechte und linke Fahrzeugseite unterschiedliche Spiegel und Spiegelgehäuse benötigt werden.

Die DE 10 2009 009 379 B3 betrifft eine Spiegelanordnung für Fahrzeuge mit einer Mehrzahl von räumlich voneinander getrennten Glaseinheiten, wobei die Glaseinheiten aus einem Spiegelglas und einem dieses Spiegelglas umgebenden Rahmen bestehen und die Rahmen einer jeweiligen Spiegeleinheit eine dauerhafte optische Farbmarkierung aufweisen.

Die US 2004/184168 A1 betrifft einen klappbaren Fahrzeugaußenspiegel mit einem Spiegelgehäuse, das schwenkbar an einer Halterung angeordnet ist, die an einer Fahrzeugtür festlegbar ist. Ein Hauptspiegelglas und ein unterhalb des Hauptspiegelglases angeordnetes Sucherspiegelglas sind in dem Spiegelgehäuse befestigt. An dem Spiegelgehäuse ist zudem ein Hilfsspiegel angeordnet, der eine Sicht entlang dem Fahrzeug nach hinten ermöglicht, wenn das Spiegelgehäuse an das Fahrzeug herangeklappt ist.

Die DE 77 02 748 U1 betrifft einen Fahrzeugrückspiegel mit einem Spiegelgehäuse und einem darin angeordneten Spiegelglas. Das Spiegelgehäuse weist eine drehbare Halterung für einen Arm eines Zusatzrückspiegels auf. Der Arm steht über die Kontur des Spiegelgehäuses hinaus vor. Der Zusatzrückspiegel ist von dem Hauptspiegel unabhängig verstellbar.

Die JP 2004-196224 A1 betrifft einen Außenspiegel mit einer Spiegelbasis, die über eine Befestigungsplatte an einer Fahrzeugstruktur befestigt ist. Innerhalb der Spiegelbasis ist ein Spiegelglas angeordnet. Unterhalb der Basis ist ein zweites Spiegelgehäuse angeordnet, in dem ein weiterer Spiegel angeordnet ist. Der Spiegel in dem Spiegelgehäuse ist größer als der Spiegel in der Spiegelbasis.

Die WO 96/04152 A1 betrifft eine Rückspiegeleinheit für Fahrzeuge mit einem Spiegelgehäuse, in dem ein flächiges Spiegelglas und ein dreieckiger Prismenspiegel angeordnet sind.

Aufgabe der vorliegenden Erfindung ist es, einen Fahrzeugspiegel und ein Verfahren zu dessen Herstellung bereitzustellen, mit denen Werkzeugkosten eingespart werden können, so dass bei gleicher Funktionalität ein kostengünstiger Fahrzeugspiegel bereitgestellt werden kann.

Erfindungsgemäß wird diese Aufgabe durch einen Fahrzeugspiegel mit den Merkmalen des Hauptanspruches und ein Verfahren mit den Merkmalen des nebengeordneten Anspruchs gelöst. Vorteilhafte Ausgestaltungen und Weiterbildungen der Erfindung sind in den Unteransprüchen, der Beschreibung sowie den Figuren näher erläutert.

Der erfindungsgemäße Fahrzeugspiegel mit einem Spiegelgehäuse, an dem ein Hauptspiegelglas und zumindest ein Zusatzspiegelglas festgelegt sind, wobei das Zusatzspiegelglas an einem separaten Zusatzspiegelgehäuse festgelegt ist, das wiederum an einem Halteelement des Spiegelgehäuses befestigt ist, sieht vor, dass das Halteelement als ein Rahmen ausgebildet ist, der an dem Spiegelgehäuse angeformt ist und dass an dem Zusatzspiegelgehäuse oder dem Halteelement zumindest ein Fixierelement zur Festlegung des Zusatzspiegelgehäuses in oder an dem Halteelement angeordnet ist, wobei an dem Halteelement ein Fixierelement angeordnet ist und an dem Zusatzspiegelgehäuse ein korrespondierendes Fixierelement angeordnet ist, das für eine linksseitige oder rechtsseitige Anordnung verschieden ausgebildet ist. Über das Zusatzspiegelgehäuse ist es möglich, ein in einem Gehäuse montiertes Zusatzspiegelglas bereitzustellen, das vollständig funktionsfähig ist, und dieses Modul aus Zusatzspiegelgehäuse und Zusatzspiegelglas an einem dafür vorgesehenen Halteelement des Spiegelgehäuses zu befestigen. Über die Art und Weise der Befestigung kann eine Winkeleinstellung des Zusatzspiegelglases relativ zu dem Hauptspiegelglas erfolgen, so dass für den gesamten Fahrzeugspiegel ein verringerter Aufwand bei den Spiegelgehäuseformen betrieben werden muss. Statt zweier Formen für das Gesamtspiegelgehäuse wird nur eine Form für ein Spiegelgehäuse des Hauptspiegelglases sowie eine wesentlich kleinere und kostengünstigere Zusatzspiegelform, ggf. in zwei Varianten benötigt, um bei einer hohen Variabilität hinsichtlich der Fahrzeugspiegelgestaltung sowohl für die rechte Fahrzeugseite als auch für die linke Fahrzeugseite angepasste Fahrzeugspiegel herstellen zu können.

Der Rahmen kann offen, geschlossen und insbesondere auch schalenartig ausgebildet sein, so dass zusammen mit dem Spiegelgehäuse eine die Rückseite des Spiegels bzw. der Spiegel geschlossene Fläche bereitgestellt wird, um die Spiegel vor Umwelteinflüssen zu schützen. Das Halteelement kann im Rahmen eines Urformverfahrens daran angeformt sein. Bei der einstückigen Ausgestaltung des Halteelementes an dem Spiegelgehäuse ist dieses starr daran befestigt, eine Verdrehung oder Winkeleinstellbarkeit des Zusatzspiegelglases zu dem Hauptspiegelglas kann durch eine Verlagerung des Halteelementes relativ zu dem Spiegelgehäuse nicht erfolgen. Die während der Zusatzspiegelmontage vorgenommene Orientierung des Zusatzspiegelglases zu dem Hauptspiegelglas kann durch Veränderung der Orientierung des Zusatzspiegelgehäuses in dem Halteelement erfolgen. Die unterschiedliche Orientierung des Zusatzspiegelglases zu dem Hauptspiegelglas kann durch zwei verschiedene Zusatzspiegelgehäuse erreicht werden, die an dieselbe Schnittstelle des Halteelementes montiert werden, alternativ kann ein Zusatzspiegelgehäuse auf unterschiedliche Art an der Schnittstelle des Halteelementes montiert werden.

Das Zusatzspiegelgehäuse ist bevorzugt in dem Halteelement eingeschrumpft oder kann alternativ über Formschlusselemente wie Clipse, Federlaschen oder angeformte oder befestigte Vorsprünge an dem Halteelement befestigt sein.

Das Hauptspiegelglas ist bevorzugt in dem Spiegelgehäuse eingeschrumpft, ebenso oder alternativ kann das Zusatzspiegelglas in dem Zusatzspiegelgehäuse eingeschrumpft sein, um ohne weitere Befestigungsmittel das Hauptspiegelglas innerhalb des Spiegelgehäuses und/oder das Zusatzspiegelglas innerhalb des Zusatzspiegelgehäuses festzulegen.

Das Zusatzspiegelgehäuse weist zumindest ein Fixierelement zur Befestigung in oder an dem Halteelement auf, wobei das zumindest eine Fixierelement an dem Zusatzspiegelgehäuse befestigt oder daran angeformt ist. Das Fixierelement bzw. die Fixierelemente können als Nut oder Nuten, Vorsprung oder Vorsprünge, Absätze oder auch nur als Markierungen oder eine Kombination davon ausgebildet sein, um entweder das jeweils dafür vorgesehene Zusatzspiegelgehäuse für die rechte oder linke Seite daran zu befestigen oder um eine winklige Ausrichtung und Festlegung des Zusatzspiegelgehäuses an oder in dem Halteelement gemäß der Vorgaben oder Wünsche der Nutzer vornehmen zu können.

Eine Variante der Erfindung weist zwei unterschiedliche Zusatzspiegelgehäuse auf, die für jede Fahrzeugseite unterschiedlich ausgebildet sind, so dass sie über das Fixierelement oder die Fixierelemente an dem Halteelement befestigt werden können. Eine andere Variante sieht vor, dass zumindest zwei Fixierelemente dergestalt zueinander an dem Zusatzspiegelgehäuse angeordnet sind, dass das Spiegelgehäuse in unterschiedlichen, vorbestimmten Winkelstellungen an dem Halteelement orientiert befestigt werden können, so dass eine Standardeinstellung für einen Einsatz rechts und/oder links an der Fahrzeugseite erleichtert vorgenommen werden kann. Die Fixierelemente erleichtern die Ausrichtung und Festlegung des Zusatzspiegelgehäuses innerhalb des Spiegelgehäuses und ermöglichen, dass mit nur einem Zusatzspiegelmodul Fahrzeugspiegel sowohl für die rechte als auch für die linke Fahrzeugseite herstellbar sind, so dass nur eine große Werkzeugform für den Fahrzeugspiegel und eine kleine Werkzeugform für das beidseitig verwendbare Zusatzspiegelgehäuse notwendig sind. Sofern mehrere Fixierelemente vorgesehen sind, sind diese bevorzugt so angeordnet, dass eine Rechts/Links-Anordnung sowie eine Anpassung an unterschiedliche Fahrzeugtypen, Sitzpositionen oder andere geometrische Gegebenheiten an dem Fahrzeug oder in dem Fahrzeug vorgenommen werden kann. Dies erhöht die Flexibilität und Individualisierbarkeit der Fahrzeugspiegel.

Das Spiegelgehäuse und/oder das Zusatzspiegelgehäuse sind bevorzugt als Spritzgussteile ausgebildet, die eine schnelle und kostengünstige Fertigung der jeweiligen Gehäuse ermöglichen.

Das Verfahren zum Herstellen eines Fahrzeugspiegels mit einem Spiegelgehäuse, einem Hauptspiegelglas und zumindest einem Zusatzspiegelglas weist die Schritte des Herstellens eines Zusatzspiegelgehäuses und Festlegen des Zusatzspiegelglases an dem Zusatzspiegelgehäuse, das Herstellen des Spiegelgehäuses mit einer Aufnahme für das Hauptspiegelglas und dem Halteelement für das Zusatzspiegelgehäuse sowie das Festlegen des Hauptspiegelglases an der Aufnahme für das Hauptspiegelglas und das Festlegen des Zusatzspiegelgehäuses an dem Halteelement auf, wobei das Haltelement an dem Spiegelgehäuse angeformt wird. Die Fertigung des Zusatzspiegelmoduls mit Zusatzspiegelglas und Zusatzspiegelgehäuse kann unabhängig von der Fertigung des Spiegelgehäuses und dessen Montage erfolgen, so dass eine Trennung von Fertigung des Zusatzspiegelmoduls und dessen Montage möglich ist. Dadurch erhöht sich die Fertigungsflexibilität, da Zusatzspiegelmodule auch vorgefertigt und gelagert werden können.

Bevorzugt werden das Hauptspiegelglas in dem Spiegelgehäuse und/oder der Zusatzspiegelglas in dem Zusatzspiegelgehäuse eingeschrumpft. Das Halteelement wird an dem Spiegelgehäuse angeformt, so dass der Montageschritt der Befestigung des Halteelementes an dem Spiegelgehäuse wegfällt und das Spiegelgehäuse einstückig zusammen mit dem Halteelement bevorzugt im Rahmen eines Spritzgießverfahrens hergestellt werden kann. Sowohl das Spiegelgehäuse als auch das Zusatzspiegelgehäuse werden vorzugsweise in einem Spritzgießverfahren hergestellt. Zur Festlegung des Zusatzspiegelgehäuses in dem Halteelement wird das Zusatzspiegelgehäuse bevorzugt in dem Halteelement eingeschrumpft. Dazu wird zunächst das Zusatzspiegelgehäuse im Rahmen eines Spritzgießverfahrens hergestellt und das Zusatzspiegelglas in das Gehäuse eingelegt, beispielsweise auf einen Absatz abgelegt, und gewartet, bis sich das aus dem Spritzgießwerkzeug entnommene, noch warme Kunststoffmaterial abgekühlt und dabei zusammengezogen hat, so dass das Zusatzspiegelgehäuse eingeschrumpft wird. In einem anderen Werkzeug wird das Spiegelgehäuse spritzgegossen, das Hauptspiegelglas eingesetzt und das vollständige Zusatzspiegelmodul mit Zusatzspiegelgehäuse und eingesetztem Zusatzspiegelglas in das Halteelement eingesetzt und gewartet, bis sich das Material des Spiegelgehäuses abgekühlt hat. Durch das Abkühlen schrumpft das Spiegelgehäuse und hält das Zusatzspiegelgehäuse in der gewünschten Ausrichtung fest. Es wird somit ein vollständiger Spiegel, nämlich das Zusatzspiegelmodul innerhalb des Gehäuses eines anderen Spiegels, nämlich des Fahrzeugspiegels, festgelegt, bevorzugt eingeschrumpft.

Nachfolgend wird ein Ausführungsbeispiel der Erfindung anhand der beigefügten Figuren näher erläutert. Es zeigen:
- Figur 1-: eine perspektivische Darstellung zweier Fahrzeugspiegel vor der Endmontage;
- Figur 2-: eine Darstellung zweier Fahrzeugspiegel in Schrägdraufsicht;
- Figur 3-: zwei Fahrzeugspiel in montiertem Zustand in Rückansicht; sowie
- Figur 4-: eine Variante der Spiegelgestaltung.

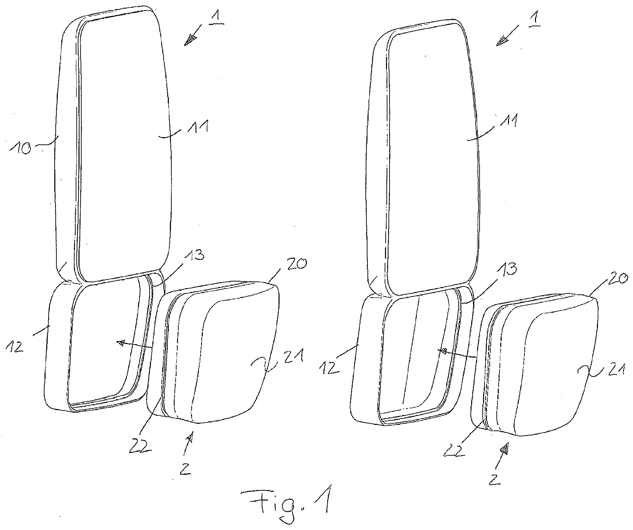

In der Figur 1 sind zwei Fahrzeugspiegel 1 in einem teilmontierten Zustand dargestellt. Beide Fahrzeugspiegel 1 weisen ein Spiegelgehäuse 10 auf, an dem ein Hauptspiegelglas 11 befestigt ist. Das Hauptspiegelglas 11 ist in einer Ausnehmung des schalenartigen Spiegelgehäuses 10 eingesetzt und darin gehalten. Das Spiegelgehäuse 10 kann das Hauptspiegelglas 11 vollumfänglich umgeben und weist auf der Rückseite des Hauptspiegelglases 11 eine im Wesentlichen geschlossene Oberfläche auf. An dem Spiegelgehäuse 10 sind Befestigungseinrichtungen zum Festlegen des Fahrzeugspiegels 1 an einem Fahrzeug vorgesehen. Ein solcher Fahrzeugspiegel 1 kann an allen Fahrzeugen angeordnet sein, beispielsweise an Lastkraftwagen, Bussen, landwirtschaftlichen Arbeitsgeräten, schienengebundenen Fahrzeugen oder dergleichen. Innerhalb des Spiegelgehäuses 10 können nicht dargestellte Verstelleinrichtungen zur motorischen Verstellung des Fahrzeugspiegels 1 an der nicht dargestellten Befestigungseinrichtung, beispielsweise an dem Ausleger oder dergleichen, angeordnet sein. Darüber hinaus können zusätzliche Komponenten innerhalb des Spiegelgehäuses 10 angeordnet und durch den Hauptspiegelglas 11 eingeschlossen sein, beispielsweise Heizeinrichtungen, Kameras, Sensoren, Sender oder GPS-Empfänger oder dergleichen.

Das Hauptspiegelglas 11 wird in dem Spiegelgehäuse 10 vorzugsweise formschlüssig und klemmend gehalten, indem das Hauptspiegelglas 11 in die dafür vorgesehene Aufnahme des Spiegelgehäuses 10 eingesetzt wird, wenn das Spiegelgehäuse 10 sich in einem erwärmten Zustand befindet. Anschließend wird das Spiegelgehäuse 10 abgekühlt wird, so dass das Hauptspiegelglas 11 in dem Spiegelgehäuse 10 eingeschrumpft wird. Alternativ oder ergänzend können Formschlusselemente vorgesehen sein, um einen mechanischen Halt des Hauptspiegelglases 11 innerhalb des Spiegelgehäuses 10 zu bewirken, beispielsweise durch Vorsprünge oder Rillen über den gesamten Umfang oder über einen Teilumfang des Hauptspiegelglases 11 an dem Spiegelgehäuse 10.

Unterhalb des Hauptspiegelglases 11 ist an dem Spiegelgehäuse 10 ein Halteelement 12 in Gestalt eines Rahmens befestigt, entweder reversibel über Befestigungselemente oder aber im Rahmen des Urformverfahrens des Spiegelgehäuses 10 angeformt, so dass sich eine einstückige Ausgestaltung des Spiegelgehäuses 10 mit einem Hauptspiegelglasgehäuse und einem Halteelement 12 ergibt. In der linken Darstellung der Figur 1 ist das Halteelement 12 als geschlossener Rahmen ausgebildet, in der rechten Darstellung der Figur 1 ist das Halteelement 12 schalenartig ausgebildet und weist neben einem umlaufenden Rand eine geschlossene Rückwand auf.

An der Innenseite des Halteelementes 12 ist ein Fixierelement 13 in Gestalt eines Vorsprunges ausgebildet. Im dargestellten Ausführungsbeispiel ist das Fixierelement 13 als umlaufender Vorsprung ausgebildet, grundsätzlich ist es auch möglich, dass statt eines umlaufenden Vorsprunges eine Nut, mehrere Vorsprünge, Absätze, Hinterschneidungen oder dergleichen ausgebildet oder an der Innenseite des Halteelementes 12 angeordnet und befestigt sind, die zur Ausrichtung eines Zusatzspiegelmoduls 2 dienen. Es können auch mehrere, zueinander versetzt angeordnete Fixierelemente 13 an dem Halteelement 12 angeordnet oder ausgebildet sind, die korrespondierend zu Fixierelementen oder Formschlusselementen an dem Zusatzspiegelmodul 2 ausgebildet sind, so dass ein Winkelversatz des Zusatzspiegelmoduls 2 zu dem Hauptspiegel 11 einfach durch Einsetzen in die jeweilige Ausnehmung oder Ausrichten an dem jeweiligen Fixierelement erfolgen kann. Es können auch mehrere Fixierelemente 13, 22 zur Festlegung des Zusatzspiegelgehäuses 20 an dem Halteelement 12 oder an dem Zusatzspiegelgehäuse 20 ausgebildet sein. Neben der Möglichkeit einer Ausrichtung und Festlegung des Zusatzspiegelgehäuses 20 in unterschiedlichen Ausrichtungen zu dem Halteelement 12 können unterschiedliche Zusatzspiegelgehäuse 20 für die Herstellung linker und rechter Fahrzeugspiegel 1 gefertigt werden, die in genau einer vorbestimmten Position in dem Halteelement 12 festgelegt werden.

Neben einer geschlossenen Ausgestaltung des Halteelementes 12 als umlaufender Rahmen kann das Halteelement 12 auch einen offenen Querschnitt aufweisen und so eine federnde Anlage an einen Zusatzspiegelglas 21 oder ein Zusatzspiegelgehäuse 20 aufweisen.

Figur 1 zeigt weiterhin ein Zusatzspiegelgehäuse 20 mit einem bereits montierten Zusatzspiegelglas 21, die zusammen das Zusatzspiegelmodul 2 ausbilden, das bereits vorgefertigt ist. Das Zusatzspiegelglas 21 kann in dem Zusatzspiegelgehäuse 20 auf unterschiedliche Arten befestigt sein, neben einem Einkleben oder Einclipsen oder einer klemmenden Halterung kann das Zusatzspiegelglas 21 in das Zusatzspiegelgehäuse 20 eingeschrumpft sein. Dies wird wie bei dem Hauptspiegelglas 11 durch Einlegen des Zusatzspiegelglases 21 in das Zusatzspiegelgehäuse 20 und anschließendes Abkühlen des erwärmten Zusatzspiegelgehäuses 20 bewirkt. Das Hauptspiegelglas 11 kann analog zu dem Zusatzspiegelglas 21 auch auf andere Art und Weise in dem Spiegelgehäuse 10 befestigt werden, z.B. durch Einkleben, Einclipsen oder klemmende Halterung.

Innerhalb des Zusatzspiegelgehäuses 20 ist zumindest ein Fixierelement 22 in Gestalt einer Nut ausgebildet, die korrespondierend zu dem Vorsprung 13 in dem Halteelement 12 ausgebildet ist. Zur Montage des gesamten Fahrzeugspiegels 1 wird das Zusatzspiegelmodul 2 in den Rahmen oder die Schale als Halteelement 12 eingeführt, was durch den Pfeil angedeutet ist. Das Zusatzspiegelgehäuse 20 wird dann entweder formschlüssig einrastend in dem Halteelement 12 gehalten oder aber eingeschrumpft, wenn das noch erwärmte Material des Spiegelgehäuses 10 mit dem angeformten oder daran angeordneten Halteelement 12 abgekühlt wird.

Sowohl an dem Halteelement 12 als auch an dem Zusatzspiegelgehäuse 20 können mehrere Fixierelemente 13, 22 angeordnet sein, die auch nur als Markierungen ausgebildet sein können, so dass unterschiedliche Positionen des Zusatzspiegelmoduls 2 innerhalb des Halteelementes 12 einfach und wiederholbar eingenommen werden können. In einer Variante sind die Fixierelemente 13, 22 so zueinander versetzt ausgebildet oder angeordnet, dass unterschiedliche Winkelstellungen des Zusatzspiegelglases 21 relativ zu dem Hauptspiegelglas 11 eingestellt werden können. Dadurch ist es leicht möglich, das Zusatzspiegelglas 21 in dem gewünschten Winkelversatz zu dem Hauptspiegelglas 11 zu orientieren, so dass eine leichte Anpassung der Ausrichtung des Zusatzspiegelglases 21 an den jeweiligen Fahrzeugtyp und die Montageseite vorgenommen werden kann. Die Ausrichtung der Spiegelgläser 11, 21 zueinander erfolgt über die Befestigung des Zusatzspiegelmoduls 2 an dem Halteelement 12. Die Einstellung des Hauptspiegelglases 11 relativ zu dem Fahrer erfolgt entweder bei der Montage an dem Fahrzeug oder aber motorisch, eine separate Verstellung des Zusatzspiegelmoduls 2 und damit des Zusatzspiegels 21 relativ zu dem Hauptspiegelglas 11 erfolgt nicht.

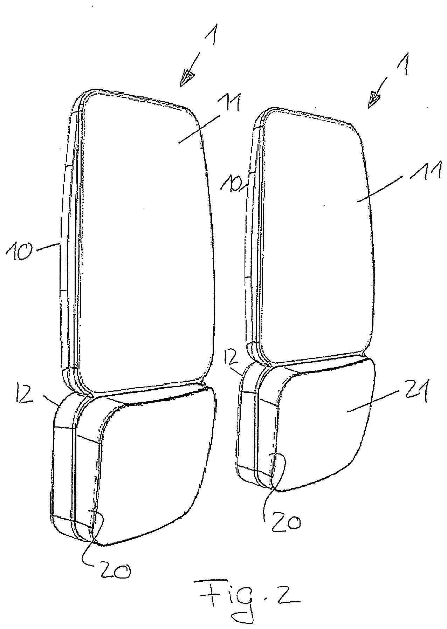

Figur 2 zeigt die fertig montierten Fahrzeugspiegel 1 gemäß Figur 1 mit dem Zusatzspiegelgehäuse 20, das an dem jeweiligen Halteelement 12 des Spiegelgehäuses 10 befestigt ist.

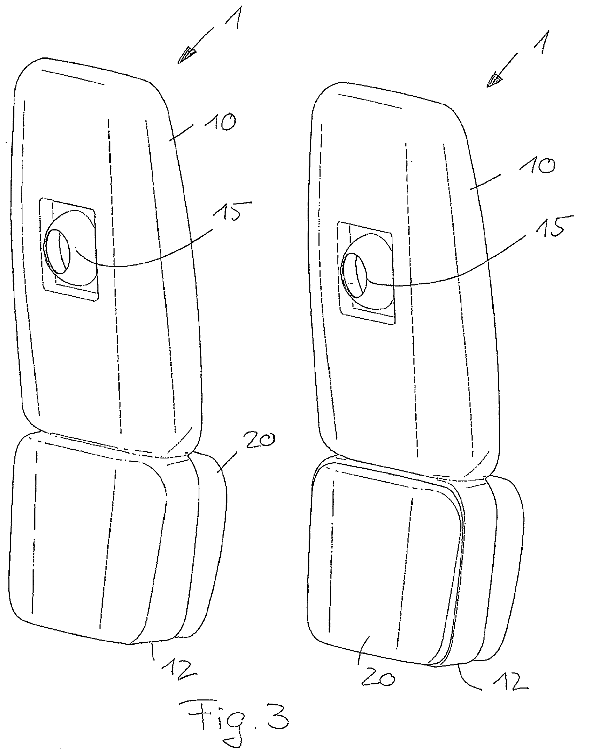

Figur 3 zeigt eine Rückansicht der beiden Fahrzeugspiegelvarianten gemäß Figur 1 im endmontierten Zustand. Die rechte Darstellung zeigt die Variante mit dem offenen Rahmenelement 12 als Halteelement. Die geschlossenwandige Rückseite des Zusatzspiegelgehäuses 20 ist ebenso zu erkennen wie die überwiegend geschlossenwandige Rückseite des Spiegelgehäuses 10. Die linke Darstellung zeigt die rechte Variante gemäß Figur 1 mit einer schalenartigen Ausgestaltung des Halteelementes 12. Durch diese Ausgestaltung ist es möglich, eine gleichmäßige Materialgestaltung des Spiegelgehäuses 10 in Verbindung mit dem einstückig angeformten Halteelement 12 zu gewährleisten. Der Schutz gegen mechanische Beschädigungen wird durch ein in der Regel besonders haltbares Material bereitgestellt, so dass das Zusatzspiegelgehäuse 20 aus einem entsprechend weniger stabilen und preiswerten Material gefertigt werden kann.

An der Rückseite des Spiegelgehäuses 10 sind Befestigungseinrichtungen 15 für die Montage an dem jeweiligen Fahrzeug ausgebildet, innerhalb des Spiegelgehäuses 12 können weitere Komponenten angeordnet sein. Die Anbringung des Fahrzeugspiegels 1 an dem Fahrzeug gefolgt durch Verbinden beispielsweise eines Auslegers oder Trägers mit der Befestigungseinrichtung 15. Neben der dargestellten Ausführungsform mit einem Hauptspiegelglas 11 und einem Zusatzspiegelglas 21 können auch Varianten mit weiteren Zusatzspiegelgläsern an dem Fahrzeugspiegel 10 verwirklicht werden, beispielsweise mit einem oberhalb des Hauptspiegelglases 11 angeordneten, nach unten gerichteten zweiten Zusatzspiegelglas und/oder weiteren Zusatzspiegelgläsern.

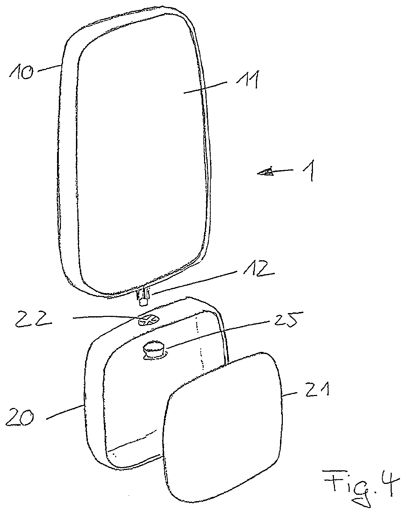

In der Figur 4 ist eine Variante eines Fahrzeugspiegels 1 mit einem Spiegelgehäuse 10 und einem darin befestigten Hauptspiegelglas 11 gezeigt. An dem unteren Ende des Spiegelgehäuses 10 ist ein Halteelement 12 in Gestalt eines Zapfens mit einer an der Außenseite ausgebildeten oder angeordneten Rastung angeordnet, entweder an dem Spiegelgehäuse 10 befestigt oder daran ausgeformt. An dem daran zu montierenden Zusatzspiegelgehäuse 20 ist eine korrespondierende Ausnehmung oder Rastung als Fixierelement 22 ausgebildet, wobei die Rastung an dem Halteelement 12 so ausgebildet ist, dass das Zusatzspiegelgehäuse 20 in der gewünschten Stellung relativ zu dem Spiegelgehäuse 10 daran festgelegt werden kann. Die Montage erfolgt durch Aufstecken des Zusatzspiegelgehäuses 20 auf das Halteelement 12, wobei gleichzeitig mit der Winkelausrichtung des Zusatzspiegelgehäuses 20 über die Rastung beziehungsweise die Zusatzspiegelgehäusefixierelemente 22 auch eine Festlegung erfolgen kann, beispielsweise durch Einschnappen von Formschusselementen, Aufspreizen elastisch verlagerbarer Verriegelungselemente oder dergleichen. Alternativ kann über ein Verspannelement 25, das um das Halteelement 12 herumgelegt oder daran befestigt werden kann, eine Festlegung des Zusatzspiegelgehäuses 20 erfolgen, sodass dieses nicht mehr entgegen der Einführrichtung des Halteelementes 12 aus dem Zusatzspiegelgehäuse 20 ausgezogen werden kann. Die formschlüssige Verriegelung über das Verspannelement 25 kann beispielsweise durch Einlegen des Verspannelementes 25 in einer Ausnehmung oder an einen Vorsprung des Halteelementes 12 erfolgen.

## Patentansprüche

1. Fahrzeugspiegel (1) mit einem Spiegelgehäuse (10), an dem ein Hauptspiegelglas (11) und zumindest ein Zusatzspiegelglas (21) festgelegt sind, wobei das Zusatzspiegelglas (21) in einem separaten Zusatzspiegelgehäuse (20) festgelegt ist, das an einem Halteelement (12) des Spiegelgehäuses (10) befestigt ist, **dadurch gekennzeichnet, dass** das Halteelement (12) als ein Rahmen ausgebildet ist, der an dem Spiegelgehäuse (10) angeformt ist und dass an dem Zusatzspiegelgehäuse (20) oder dem Halteelement (12) zumindest ein Fixierelement (13, 22) zur Festlegung des Zusatzspiegelgehäuses (20) in oder an dem Halteelement (12) angeordnet ist, wobei an dem Halteelement (12) ein Fixierelement (13) angeordnet ist und an dem Zusatzspiegelgehäuse (20) ein korrespondierendes Fixierelement (22) angeordnet ist, das für eine linksseitige oder rechtsseitige Anordnung verschieden ausgebildet ist.

2. Fahrzeugspiegel (1) nach Anspruch 1, **dadurch gekennzeichnet, dass** das Zusatzspiegelgehäuse (20) in dem Halteelement (12) eingeschrumpft oder über Formschlusselemente daran befestigt ist.

3. Fahrzeugspiegel (1) nach einem der voranstehenden Ansprüche, **dadurch gekennzeichnet, dass** das Hauptspiegelglas (11) in dem Spiegelgehäuse (10) und/oder der Zusatzspiegel (21) in dem Zusatzspiegelgehäuse (20) eingeschrumpft ist.

4. Fahrzeugspiegel (1) nach Anspruch 1, **dadurch gekennzeichnet, dass** zumindest zwei Fixierelemente (13, 22) dergestalt versetzt zueinander an dem Zusatzspiegelgehäuse (20) oder dem Halteelement (12) angeordnet sind, dass das Zusatzspiegelgehäuse (20) in unterschiedlichen, vorbestimmten Winkelstellungen an dem Halteelement (12) orientierbar ist.

5. Fahrzeugspiegel (1) nach einem der voranstehenden Ansprüche, **dadurch gekennzeichnet, dass** das Spiegelgehäuse (10) und/oder das Zusatzspiegelgehäuse (20) als Spritzgussteile ausgebildet sind.

6. Verfahren zum Herstellen eines Fahrzeugspiegels (1) nach einem der voranstehenden Ansprüche mit einem Spiegelgehäuse (10), einem Hauptspiegelglas (11) und zumindest einem Zusatzspiegelglas (21), mit den Schritten:
a. Herstellen eines Zusatzspiegelgehäuses (20) und Festlegen des Zusatzspiegelglases (21) an dem Zusatzspiegelgehäuse (20)
b. Herstellen des Spiegelgehäuses (10) mit einer Aufnahme für den Hauptspiegelglas (11) und einem Halteelement (12) für das Zusatzspiegelgehäuse (20)
c. Festlegen des Hauptspiegelglases (11) an der Aufnahme und des Zusatzspiegelgehäuses (20) an dem Halteelement (12), **dadurch gekennzeichnet, dass** das Haltelement (12) an dem Spiegelgehäuse (10) angeformt wird.

7. Verfahren nach Anspruch 6, **dadurch gekennzeichnet, dass** das Hauptspiegelglas (11) in dem Spiegelgehäuse (10) und/oder das Zusatzspiegelglas (21) in dem Zusatzspiegelgehäuse (20) eingeschrumpft werden.

8. Verfahren nach einem der Ansprüche 6 oder 7, **dadurch gekennzeichnet, dass** das Spiegelgehäuse (10) und/oder das Zusatzspiegelgehäuse (20) in einem Spritzgießverfahren hergestellt werden.

9. Verfahren nach einem der Ansprüche 6 bis 8, **dadurch gekennzeichnet, dass** das Zusatzspiegelgehäuse (20) in das Halteelement (12) eingeschrumpft wird.

## Claims

1. Vehicle mirror (1) comprising a mirror housing (10) on which a main mirror glass (11) and at least one additional mirror glass (21) are secured, the additional mirror glass (21) being secured in a separate additional mirror housing (20) which is fastened to a retaining element (12) of the mirror housing (10), **characterized in that** the retaining element (12) is in the form of a frame integrally molded on the mirror housing (10) and **in that** at least one fixing element (13, 22) for securing the additional mirror housing (20) in or on the retaining element (12) is arranged on the additional mirror housing (20) or the retaining element (12), whereas a fixing element (13) is arranged on the retaining element (12) and a corresponding fixing element (22) is arranged on the additional mirror housing (20), which fixing element is designed differently for being arranged on the left-hand side or on the right-hand side.

2. Vehicle mirror (1) according to claim 1, **characterized in that** the additional mirror housing (20) is shrink-fitted in the retaining element (12) or fastened thereon by means of form-fitting elements.

3. Vehicle mirror (1) according to either of the preceding claims, **characterized in that** the main mirror glass (11) is shrink-fitted in the mirror housing (10) and/or the additional mirror (21) is shrink-fitted in the additional mirror housing (20).

4. Vehicle mirror (1) according to claim 1, **characterized in that** at least two fixing elements (13, 22) are arranged on the additional mirror housing (20) or the retaining element (12) so as to be offset from one another such that the additional mirror housing (20) can be oriented on the retaining element (12) in various predetermined angular positions.

5. Vehicle mirror (1) according to any of the preceding claims, **characterized in that** the mirror housing (10) and/or the additional mirror housing (20) are designed as injection-molded parts.

6. Method for producing a vehicle mirror (1) according to one of the preceding claims, comprising a mirror housing (10), a main mirror glass (11) and at least one additional mirror glass (21), comprising the steps of:
a. producing an additional mirror housing (20) and securing the additional mirror glass (21) on the additional mirror housing (20)
b. producing the mirror housing (10) comprising a receiving portion for the main mirror glass (11) and a retaining element (12) for the additional mirror housing (20)
c. securing the main mirror glass (11) on the receiving portion and securing the additional housing (20) on the retaining element (12),
**characterized in that** the retaining element (12) is integrally molded on the mirror housing (10).

7. Method according to claim 6, **characterized in that** the main mirror glass (11) is shrink-fitted in the mirror housing (10) and/or the additional mirror glass (21) is shrink-fitted in the additional mirror housing (20).

8. Method according to either claim 6 or claim 7, **characterized in that** the mirror housing (10) and/or the additional mirror housing (20) are produced in an injection-molding process.

9. Method according to any of claims 6 to 8, **characterized in that** the additional mirror housing (20) is shrunk-fitted in the retaining element (12).

## Revendications

1. Rétroviseur (1) de véhicule avec un logement de rétroviseur (10) auquel sont fixés un verre de miroir principal (11) et au moins un verre de miroir supplémentaire (21), le verre de miroir supplémentaire (21) étant fixé dans un logement de rétroviseur supplémentaire (20) séparé qui est fixé à un élément de rétention (12) du logement de rétroviseur (10), **caractérisé en ce que** l'élément de rétention (12) est constitué d'un cadre dont la forme est ajustée au logement de rétroviseur (10), et **en ce qu'**au logement de rétroviseur supplémentaire (20) ou à l'élément de rétention (12) est ajusté au moins un élément de fixation (13, 22) pour fixer le logement de rétroviseur supplémentaire (20) dans ou sur l'élément de rétention (12), et à l'élément de rétention (12) est disposé un élément de fixation (13) et au logement de rétroviseur supplémentaire (20) est disposé un élément de fixation correspondant (22) constitué différemment pour une disposition à gauche ou à droite.

2. Rétroviseur (1) selon la revendication 1, **caractérisé en ce que** le logement de rétroviseur supplémentaire (20) est inséré dans l'élément de rétention (12) ou y est fixé par des éléments d'ajustement de forme.

3. Rétroviseur (1) selon une des revendications précédentes, **caractérisé en ce que** le verre de miroir principal (11) est inséré dans le logement de rétroviseur (10) et/ou **en ce que** le verre de miroir supplémentaire (21) est inséré dans le logement de rétroviseur supplémentaire (20).

4. Rétroviseur (1) selon la revendication 1, **caractérisé en ce qu'**au moins deux éléments de fixation (13, 22) sont disposés décalés les uns par rapport aux autres sur le logement de rétroviseur supplémentaire (20) ou sur l'élément de rétention (12) au point que le logement de rétroviseur supplémentaire (20) soit orientable selon différents réglages angulaires prédéterminés par rapport à l'élément de rétention (12).

5. Rétroviseur (1) selon une des revendications précédentes, **caractérisé en ce que** le logement de rétroviseur (10) et/ou le logement de rétroviseur supplémentaire (20) sont constitués sous forme de pièces moulées par injection.

6. Procédé de fabrication d'un rétroviseur (1) de véhicule selon l'une des revendications précédentes, avec un logement de rétroviseur (10), un verre de miroir principal (11) et au moins un verre de miroir supplémentaire (21), comprenant les étapes suivantes :
a. fabrication d'un logement de rétroviseur supplémentaire (20) et fixation du verre de miroir supplémentaire (21) sur le logement de rétroviseur supplémentaire (20)
b. fabrication du logement de rétroviseur (10) avec un emplacement d'admission du verre de miroir principal (11) et avec un élément de rétention (12) pour le logement de rétroviseur supplémentaire (20)
c. fixation du verre de miroir principal (11) sur l'emplacement et du logement de rétroviseur supplémentaire (20) sur l'élément de rétention (12), **caractérisé en ce que** l'élément de rétention (12) a sa forme ajustée au logement de rétroviseur (10).

7. Procédé selon la revendication 6, **caractérisé en ce que** le verre de miroir principal (11) est inséré dans le logement de rétroviseur (10) et/ou **en ce que** le verre de miroir supplémentaire (21) est inséré dans le logement de rétroviseur supplémentaire (20).

8. Procédé selon une des revendications 6 ou 7, **caractérisé en ce que** le logement de rétroviseur (10) et/ou le logement de rétroviseur supplémentaire (20) sont constitués sous forme de pièces moulées par injection.

9. Procédé selon une des revendications 6 à 8, **caractérisé en ce que** le logement de rétroviseur supplémentaire (20) est inséré dans l'élément de rétention (12).
